# EUROPEAN PATENT APPLICATION

(11) **EP 1 701 241 A1**
(43) Date of publication of application: **13.09.2006**
(21) Application number: 05251369.4
(22) Date of filing: 08.03.2005
(51) Int. Cl.: G06F 3/033

(54) **Handheld electronic device having display of disambiguation choices, and associated method**

(71) Applicant: Research In Motion Limited, Waterloo, Ontario N2L 3W8 (CA)
(72) Inventor: Pathiyal, Krishna, Waterloo, Ontario N2V 2R6 (CA); Griffin, Jason T., Kitchener, Ontario N2P 2L3 (CA)
(74) Representative: Roberts, Gwilym Vaughan

(57) **Abstract**

A method of displaying character combination choices on an electronic device having a text disambiguation function, wherein the choices are generated by the text disambiguation function based on a previously entered key depression sequence. The method first determines whether all of the character combination choices will fit on a first screen. If so, the method includes displaying all of the choices on the first screen. However, if it is determined that all of the choices will not fit on the first screen, the method includes steps of: (i) displaying a first subset of the plurality of character combination choices on the first screen, and (ii) displaying an additional screen indicator on the first screen, wherein the additional screen indicator indicates that a second subset of the plurality of character combination choices may be selectively displayed on a second screen. Also, a handheld electronic device that implements the method.

## Description

### BACKGROUND OF THE INVENTION

### Field of the Invention

The invention relates generally to electronic devices employing a text disambiguation function, and, more particularly, to a handheld electronic device having an improved manner of displaying character combination choices generated by a text disambiguation function. The invention also relates to an improved method of displaying character combination choices generated by a text disambiguation function.

### Background Information

Numerous types of handheld electronic devices are known. Examples of such handheld electronic devices include, for instance, personal data assistants (PDAs), handheld computers, two-way pagers, cellular telephones, and the like. Many handheld electronic devices also feature wireless communication capability, although many such handheld electronic devices are stand-alone devices that are functional without communication with other devices.

Such handheld electronic devices are generally intended to be portable, and thus are of a relatively compact configuration in which keys and other input structures often perform multiple functions under certain circumstances or may otherwise have multiple aspects or features assigned thereto. With advances in technology, handheld electronic devices are built to have progressively smaller form factors yet have progressively greater numbers of applications and features resident thereon. As a practical matter, the keys of a keypad can only be reduced to a certain small size before the keys become relatively unusable. In order to enable text entry, however, a keypad must be capable of entering all twenty-six letters of the Roman alphabet, for instance, as well as appropriate punctuation and other symbols.

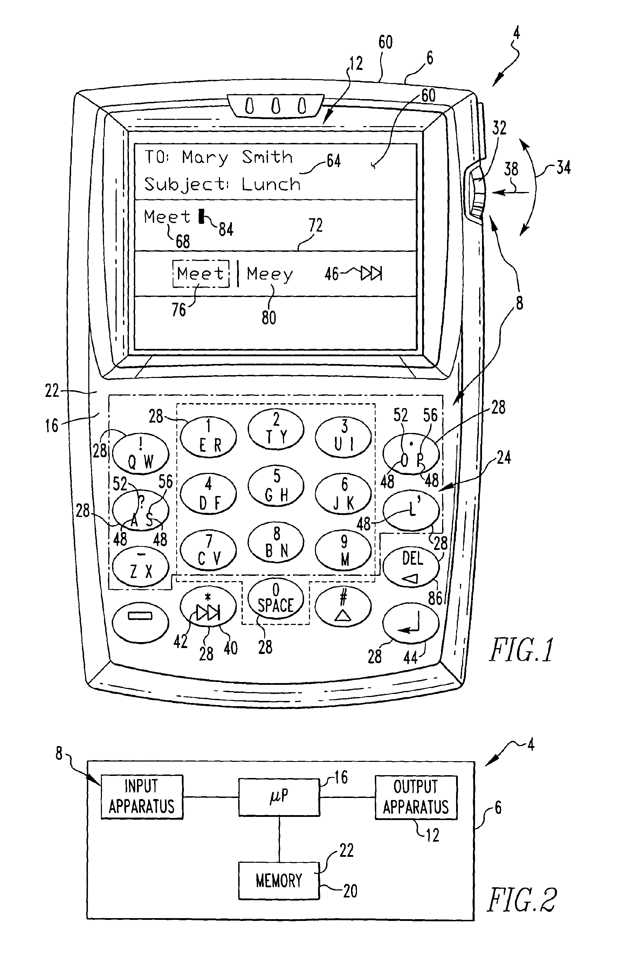

One way of providing numerous letters in a small space has been to provide a "reduced keyboard" in which multiple letters, symbols, and/or digits, and the like, are assigned to any given key. For example, a touch-tone telephone includes a reduced keyboard by providing twelve keys, of which ten have digits thereon, and of these ten keys, eight have Roman letters assigned thereto. For instance, one of the keys includes the digit "2" as well as the letters "A", "B", and "C". Since a single actuation of such a key potentially could be intended by the user to refer to any of the letters "A", "B", and "C", and potentially could also be intended to refer to the digit "2", the input (by actuation of the key) generally is an ambiguous input and is in need of some type of disambiguation in order to be useful for text entry purposes. Other known reduced keyboards have included other arrangements of keys, letters, symbols, digits, and the like. One example of a reduced keyboard is the keypad 24 forming a part of the handheld electronic device 4 shown in Figure 1 and described in greater detail herein. Keypad 24 is what is known as a reduced QWERTY keyboard.

In order to enable a user to make use of the multiple letters, digits, and the like on any given key in an ambiguous keyboard, numerous keystroke interpretation systems have been provided. For instance, a "multi-tap" system allows a user to substantially unambiguously specify a particular character on a key by pressing the same key a number of times equivalent to the position of the desired character on the key. For example, on the aforementioned telephone key that includes the letters "ABC", if the user desires to specify the letter "C", the user will press the key three times. Similarly, on the aforementioned keypad 24, if the user desires to specify the letter "C", the user will press the key that includes "CV7" once, and if the user desires to specify the letter "I", the user will press the key that includes "UI3" two times.

Another exemplary keystroke interpretation system would include key chording, of which various types exist. For instance, a particular character can be entered by pressing two keys in succession or by pressing and holding a first key while pressing a second key. Still another exemplary keystroke interpretation system would be a "press-and-hold / press-and-release" interpretation function in which a given key provides a first result if the key is pressed and immediately released, and provides a second result if the key is pressed and held for a short period of time.

Another keystroke interpretation system that has been employed is a software-based text disambiguation function. In such a system, a user typically presses keys to which one or more characters have been assigned, generally pressing each key one time for each desired letter, and the disambiguation software attempts to predict the intended input. Numerous such systems have been proposed. One example of such a system is disclosed in commonly owned United States Patent Application Serial No. 10/931,281, entitled "Handheld Electronic Device With Text Disambiguation," the disclosure of which is incorporated herein by reference. As is known, many such systems display an output component as the user is typing (pressing keys) that includes a list of possible intended input character strings (i.e., what the user intended while typing) that are generated by the disambiguation software. For example, Figure 1 shows a display 60 that may be provided by the disambiguation software system described in the aforementioned commonly owned United States Patent Application Serial No. 10/931,281. As described in greater detail herein, Figure 1 shows an exemplary output 64 being depicted on the display 60 that includes a text component 68 and a variant component 72. The variant component 72 includes a default portion 76 and a variant portion 80. The variant component 72 represents a list of possible intended inputs (in the form of a number of character strings or combinations) as generated by the disambiguation software. A user may select one of the items listed in the variant component 72 for inclusion in the final text component 68.

In many current software-based text disambiguation systems, the output component that includes the list of possible intended inputs that is generated by the disambiguation software, such as a variant component 72, is presented as a single line of text. A problem arises when the number of possible intended inputs that is generated by the disambiguation software is so large that all of them cannot fit on a single line of the display. In such situations, the list is typically continued on one or more additional screens (each screen having a single line of text containing possible intended input choices), and the user must take some action, such as scrolling a thumbwheel or pressing a predetermined function button, to move from one screen to the next to view all of the choices. The problem with current systems, however, is that the user is not given any kind of indication that the user must navigate to additional screen(s) to view additional, alternative choices.

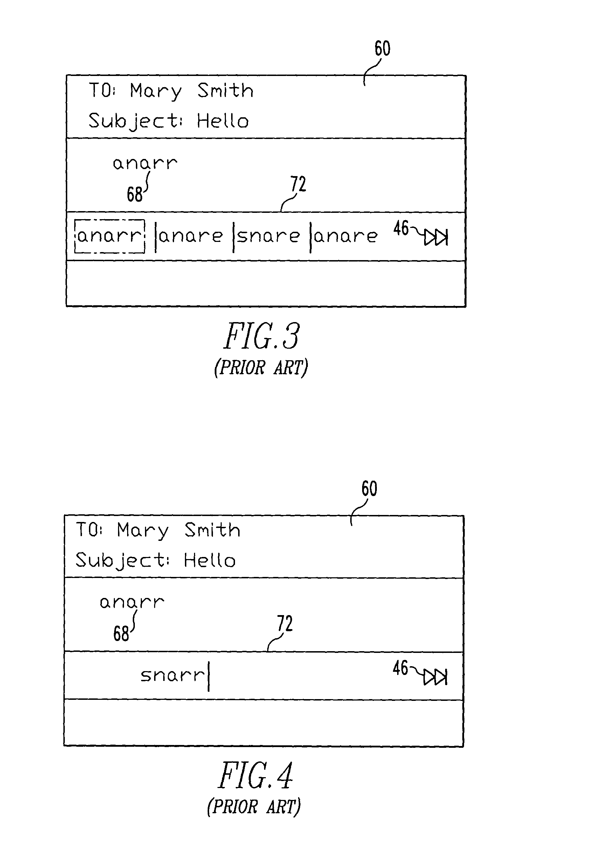

For example, Figures 3 and 4 show an example of a prior art output containing a prior art variant component 72 that may appear on a display such as a display 60 in a situation where the number of possible intended inputs (possible character strings or combinations) that is generated by the disambiguation software is too large to fit on a single screen. In particular, in the example shown Figures 3 and 4, the user executed a particular key depression sequence (the user pressed the following keys in the following order: "AS" key, "BN" key, "AS" key, "ER" key, "ER" key), and the number of possible intended inputs that was generated by the disambiguation software that a user may choose from is five. However, because, in this example, a maximum of four choices may be displayed in a single line on a screen (Figure 3), the additional, fifth choice must be presented on a subsequent screen (Figure 4). To get to that subsequent screen, the user must take some affirmative action, such as scrolling a thumbwheel or pressing a particular button. For example, the <NEXT> key 40 shown in Figure 1 may be may be designated as an input key to be used to access subsequent screens. In addition, a graphic 46 may be displayed on display 60 to indicate to a user that a corresponding key having the same graphic (the <NEXT> key 40 in Figure 1) may be used to access subsequent screens, if available. However, the user is not given any indication on the screen shown in Figure 3 that additional choices, when available, are in fact present on another screen or screens (the graphic 46 is displayed regardless of whether screens with additional choices exist). As a result, a user may miss a desired choice.

Thus, a method is needed for electronic devices that employ text disambiguation software that simplifies and shortens the procedure required to replace an incorrect word generated by the disambiguation software.

### SUMMARY OF THE INVENTION

An improved handheld electronic device and an associated method provide the display of character combination choices generated by a text disambiguation function in a manner that, when appropriate, more readily alerts a user that some of the choices are provided on a subsequent screen or screens of the device. As a result, users are less likely to miss additional choices that cannot be displayed on a single screen and therefore must be displayed on a subsequent screen or screens.

These and other aspects of the invention are provided by a method of displaying a plurality of character combination choices on a display of an electronic device, such as a handheld electronic device, that has a text disambiguation function, wherein the character combination choices are generated by the text disambiguation function based on a key depression sequence previously input into the electronic device. The method first determines whether all of the plurality of character combination choices will fit on a first screen provided on the display. If so, the method includes displaying all of the plurality of character combination choices on the first screen. However, if it is determined that all of the plurality of character combination choices will not fit on the first screen, the method includes steps of: (i) displaying a first subset of the plurality of character combination choices on the first screen, and (ii) displaying an additional screen indicator on the first screen, wherein the additional screen indicator indicates that a second subset of the plurality of character combination choices may be selectively displayed on a second screen provided on the display. These steps are then repeated when an additional key is depressed, thereby creating a second key depression sequence and a corresponding second set of character combination choices.

In one particular embodiment, no more than a maximum number of character combination choices may be displayed on the first screen, and the step of determining whether all of the plurality of character combination choices will fit on the first screen includes determining whether the total number of character combination choices is greater than the maximum number. The maximum number of character combination choices may a pre-set number that is established before the key depression sequence is input into the electronic device. Alternatively, the maximum number of character combination choices may determined after the key depression sequence is input into the electronic device, as it will depend on the number of characters in each character combination choice.

The additional screen indicator may take on any of a number of forms, such as an ellipses. In addition, the additional screen indicator may have a distinctive appearance, such as a different color or a periodic flash.

The invention also relates to a handheld electronic device that includes a keyboard having a plurality of keys, a display, a processor, and a memory storing one or more routines executable by the processor. The routines implement a text disambiguation function that generates a plurality of character combination choices based on a depression of a plurality of the keys. In addition, the routines are adapted to implement the method described above.

### BRIEF DESCRIPTION OF THE DRAWINGS

A full understanding of the invention can be gained from the following Description of the Preferred Embodiments when read in conjunction with the accompanying drawings in which:
Figure 1 is a front view of an improved handheld electronic device in accordance with the invention;
Figure 2 is a block diagram of the handheld electronic device of Figure 1;
Figures 3 and 4 are exemplary prior art screens provided on a display of a prior art handheld electronic that display character combination choices generated by a text disambiguation function;
Figures 5 and 6 are exemplary screens provided on a display of the handheld electronic shown in Figures 1 and 2 that display character combination choices generated by a text disambiguation function according to the present invention; and
Figure 7 is a flowchart showing the basic steps utilized by a routine for displaying character combination choices generated by a text disambiguation function according to the invention.

Similar numerals refer to similar parts throughout the specification.

### DESCRIPTION OF THE PREFERRED EMBODIMENTS

An improved handheld electronic device 4 is indicated generally in Figure 1 and is depicted schematically in Figure 2. The exemplary handheld electronic device 4 includes a housing 6 upon which are disposed a processor unit that includes an input apparatus 8, an output apparatus 12, a processor 16, and a memory 20. The processor 16 may be, for instance, and without limitation, a microprocessor (µP) and is responsive to inputs from the input apparatus 8 and provides output signals to the output apparatus 12. The processor 16 also interfaces with the memory 20. Examples of handheld electronic devices are included in U.S. Patent Nos. 6,452,588 and 6,489,950, the disclosures of which are incorporated by reference herein.

As can be understood from Figure 1, the input apparatus 8 includes a keypad 24 and a thumbwheel 32. The keypad 24 is in the exemplary form of a reduced QWERTY keyboard including a plurality of keys 28 that serve as input members. It is noted, however, that the keypad 24 may be of other reduced configurations, such as a reduced AZERTY keyboard, a reduced QWERTZ keyboard, or other keyboard arrangement, whether presently known or unknown. In this regard, the expression "reduced" and variations thereof, in the context of a keyboard, such as a keypad or other arrangement of input members, shall refer broadly to an arrangement in which at least one of the input members has assigned thereto a plurality of characters within a given set, such as a plurality of letters, for example, in the set of Roman letters, for example, thereby rendering ambiguous an intended result of an actuation of the at least one of the input members. In addition, as used herein, the expression "key" and variations thereof shall refer broadly to any of a variety of input members such as buttons, switches, and the like without limitation.

In this regard, and as will be set forth below in greater detail, the system architecture of the handheld electronic device 4 advantageously is organized to be operable independent of the specific layout of the keypad 24. Accordingly, the system architecture of the handheld electronic device 4 can be employed in conjunction with virtually any keyboard layout substantially without requiring any meaningful change in the system architecture.

The keys 28 are disposed on a front face of the housing 6, and the thumbwheel 32 is disposed at a side of the housing 6. The thumbwheel 32 can serve as another input member and is both rotatable, as is indicated by the arrow 34, to provide selection inputs to the processor 16, and also can be pressed in a direction generally toward the housing 6, as is indicated by the arrow 38, to provide another selection input to the processor 16.

Among the keys 28 of the keypad 24 are a <NEXT> key 40 and an <ENTER> key 44. The <NEXT> key 40 can be pressed to provide a selection input to the processor 16 and provides substantially the same selection input as is provided by a rotational input of the thumbwheel 32. Since the <NEXT> key 40 is provided adjacent a number of the other keys 28 of the keypad 24, the user can provide a selection input to the processor 16 substantially without moving the user's hands away from the keypad 24 during a text entry operation. As seen in Figure 1, the <NEXT> key 40 additionally and advantageously includes a graphic 42 disposed thereon, and in certain circumstances the output apparatus 12 also displays a displayed graphic 46 thereon to identify the <NEXT> key 40 as being able to provide a selection input to the processor 16. In this regard, the displayed graphic 46 of the output apparatus 12 is substantially similar to the graphic 42 on the <NEXT> key and thus identifies the <NEXT> key 40 as being capable of providing a desirable selection input to the processor 16.

As can further be seen in Figure 1, many of the keys 28 include a number of characters 48 disposed thereon. As employed herein, the expression "a number of" and variations thereof shall refer broadly to any quantity, including a quantity of one, and in certain circumstances herein can also refer to a quantity of zero. In the exemplary depiction of the keypad 24, many of the keys 28 include two or more characters, such as including a first character 52 and a second character 56 assigned thereto. It is understood that the expression "characters" shall broadly be construed to include letters, digits, symbols and the like and can additionally include ideographic characters, components thereof, other linguistic elements, and the like. The keys 28 having one or more characters 48 can be considered to be linguistic input members.

One of the keys 28 of the keypad 24 includes as the characters 48 thereof the letters "Q" and "W", and an adjacent key 28 includes as the characters 48 thereof the letters "E" and "R". It can be seen that the arrangement of the characters 48 on the keys 28 of the keypad 24 is generally of a QWERTY arrangement, albeit with many of the keys 28 including two of the characters 48.

The memory 20 is depicted schematically in Figure 2. The memory 20 can be any of a variety of types of internal and/or external storage media, alone or in combination, such as, without limitation, RAM, ROM, EPROM(s), EEPROM(s), and the like that provide a storage register for data storage such as in the fashion of an internal storage area of a computer, and can be volatile memory or nonvolatile memory. The memory 20 additionally includes a number of routines depicted generally with the numeral 22 for the processing of data. The routines 22, executable by the processor 16, can be in any of a variety of forms such as, without limitation, software, firmware, and the like. The routines 22 include a software-based text disambiguation function as described elsewhere herein as an application, as well as other routines. The software-based text disambiguation function may, in one embodiment, be as described in commonly owned United States Patent Application Serial No. 10/931,281, entitled "Handheld Electronic Device With Text Disambiguation," the disclosure of which is incorporated herein by reference. In addition, the routines 22 also preferably include a non-predictive keystroke interpretation system, such as a "multi-tap" system that allows a user to substantially unambiguously specify a particular character 48 on a particular key 28 by pressing the same key 28 a number of times equivalent to the position of the desired character 48 on the key 28.

The output apparatus 12 includes a display 60 upon which can be provided an output 64 according to the preferred embodiment of the invention. An exemplary output 64 is depicted on the display 60 in Fig. 1. The output 64 includes a text component 68 and a variant component 72. The variant component 72 includes a default portion 76 and a variant portion 80. The display also includes a cursor 84 that depicts generally where the next input from the input apparatus 8 will be received.

The text component 68 of the output 64 provides a depiction of the default portion 76 of the output 64 at a location on the display 60 where the text is being input. The variant component 72 is disposed generally in the vicinity of the text component 68 and provides, in addition to the default proposed output 76, a depiction of the various alternate character combination choices, i.e., alternates to the default proposed output 76, that are proposed by the text disambiguation function in response to an input sequence of key actuations of the keys 28.

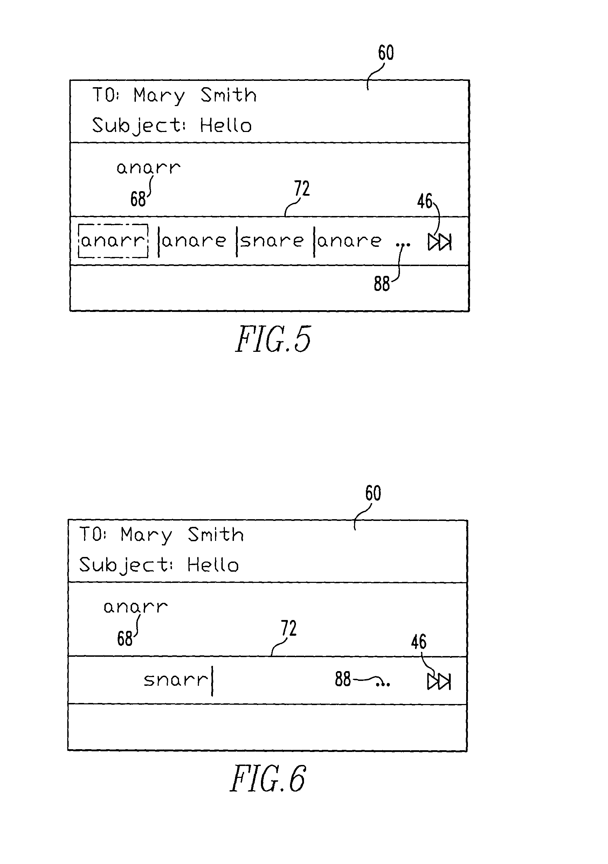

As described in detail in commonly owned United States Patent Application Serial No. 10/931,281, entitled "Handheld Electronic Device With Text Disambiguation," the default portion 76 is proposed by the text disambiguation function as being the most likely disambiguated interpretation of the ambiguous input provided by the user. The variant portion 80 includes a predetermined quantity of alternate proposed interpretations of the same ambiguous input from which the user can select, if desired. It is also noted that the exemplary variant component 72 is depicted herein as extending in a horizontal fashion at a position below the then text component 68, but it is understood that numerous other arrangements could be provided without departing from the concept and scope of the invention. However, it will be appreciated that, regardless of the particular arrangement of the variant component 72, only a limited number of character strings forming a part of the variant component 72 may be provided on a single screen provided on display 60. The particular number may be pre-set to an established value, or may change depending upon the size of the character strings in question. The important point, however, is that in many circumstances there may be more possible character string choices available than can be fit on a single screen. For example, referring to Figures 5 and 6, if a user performed a key depression sequence consisting of the "AS" key followed by the "BN" key followed by the "AS" key followed by the "ER" key followed by the "ER" key, the text disambiguation function may provide a total of five possible character string combinations to choose from. However, in this example, on four of the character string combinations may fit on a single screen, as shown in Figure 5. The fifth character string combination ("snarr") must be presented on a second, separate screen shown in Figure 6. In order to reach this second screen, a user must take some affirmative action, such as scrolling thumbwheel 32 or pressing a particular button such as <NEXT> key 40. As discussed above, in previous systems, it is possible that a user may not recognize that the fifth character combination choice is present on the second screen and may therefore miss it. This problem is overcome by according to an aspect of the invention by providing an additional screen indicator 88 on display 60 when additional screens containing additional character combination choices generated by the text disambiguation function exist. The purpose of the additional screen indicator 88 is to alert the user that one or more additional screens containing additional character combination choices exist beyond the screen currently being viewed (which is the screen on which the additional screen indicator 88 is provided), and that the user must take the necessary affirmative action, such as scrolling thumbwheel 32 or pressing a particular button such as <NEXT> key 40, if the user wishes to view the additional character combination choices. The additional screen indicator 88 may take any of a number of forms, such as, without limitation, the ellipses shown in Figures 5 and 6. In addition, the additional screen indicator 88 may have other characteristics that set it apart from the other elements present on the screen, such as being provided in a different color or being adapted to flash in some manner. The additional screen indicator 88 may even be a modified form of graphic 46, such as a different color or flashing graphic 46, such that it is distinguishable from the standard graphic 46 utilized under other conditions.

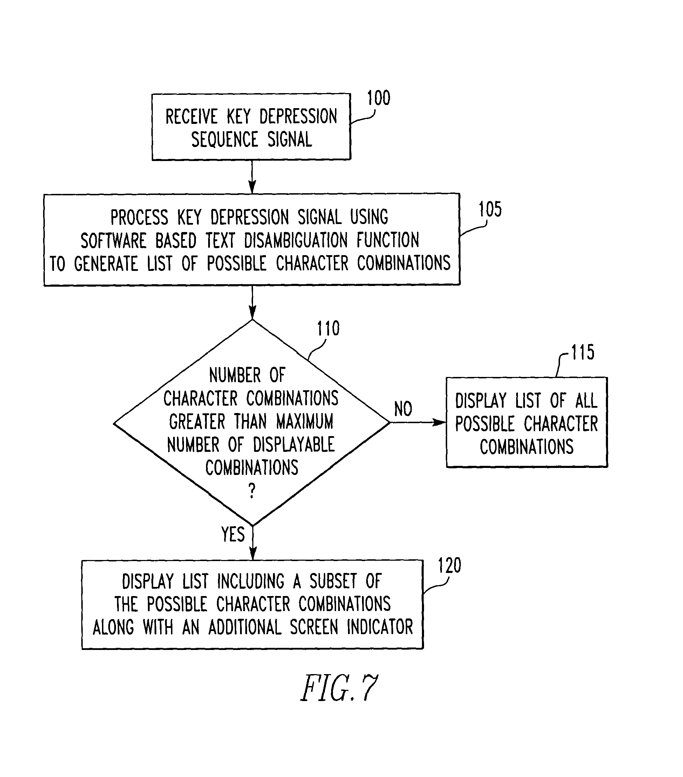

According to an aspect of the invention, handheld electronic device 4 includes a routine 22, stored in memory 20 and executable by processor 16, for displaying the character combination choices generated by the text disambiguation function of handheld electronic device 4 in a manner that ensures that a user will, when appropriate, know that additional character combination choices exist on a screen or screens that follow the screen currently being displayed on display 60. To do so, the routine utilizes an additional screen indicator 88 as described above. Figure 7 is a flowchart depicting the basic steps utilized by such a routine.

As seen in Figure 7, at step 100, processor 16 receives a key depression sequence signal which represents the sequence of keys 28 that, to that point in the entry of a particular word or other piece of text, have been depressed by the user. Next, at step 105, the text disambiguation function processes the key depression sequence signal received at step 100 and generates a list of possible character combination choices based thereon. At step 110, a determination is then made as to whether the number of possible character combination choices generated in step 105 is greater than the maximum number of possible character combination choices that may be displayed on a single screen on display 60. As noted above, this maximum number may be a pre-set maximum number, such as four, or may change depending upon how many characters are present in each of the possible character combination choices generated at step 105 (i.e., each screen may only display a certain number of total characters and therefore the number of possible character combination choices that may be displayed on a single screen will depend on how many characters each combination has). If the answer as step 110 is no, then, at step 115, a list including all of the possible character combination choices is displayed on a single screen display 60, such as in the form of variant component 72. For obvious reasons, the screen that is displayed in this step will not include an additional screen indicator 88. If, however, the answer at step 110 is yes, then, at step 120, a list including a subset of the possible character combination choices generated at step 105 (the subset will include no more than the maximum number form step 110) is displayed on a single screen display 60, such as in the form of variant component 72, along with an additional screen indicator 88. The additional screen indicator 88 will alert the user that additional possible character combination choices are available and may be viewed on an additional, subsequent screen or screens. As will be appreciated, step 120 may be repeated as many times as is necessary, each time with a new, different screen and a new, different subset, to display all of possible character combination choices generated at step 105. In addition, as will be appreciated, the steps shown in Figure 7 are preferably repeated with each new key depression sequence (i.e., when each additional key is depressed during the input of a word or the like). As a result, first, second, third, etc. sets of possible character combinations (each set corresponding to a key depression sequence) will be displayed according to the method of the present invention.

While specific embodiments of the invention have been described in detail, it will be appreciated by those skilled in the art that various modifications and alternatives to those details could be developed in light of the overall teachings of the disclosure. For example, while the invention has been described in connection with the a handheld electronic device that employs a text disambiguation function, it will be appreciated that the invention may also be utilized in connection with other types of electronic devices that employ a text disambiguation function, such as a personal computer or the like. Accordingly, the particular arrangements disclosed are meant to be illustrative only and not limiting as to the scope of the invention which is to be given the full breadth of the claims appended and any and all equivalents thereof.

## Claims

1. A method of displaying character combination choices on a display of an electronic device, said electronic device having a text disambiguation function, the method comprising:
generating a first set of character combination choices using said text disambiguation function based on a first key depression sequence input into said electronic device;
determining whether all of the character combination choices of said first set will fit on a first screen provided on said display;
displaying said all of the character combination choices of said first set on said first screen if it is determined that said all of the character combination choices of said first set will fit on said first screen;
if it is determined that said all of the character combination choices of said first set will not fit on said first screen: (i) displaying a first subset of said all of the character combination choices of said first set on said first screen, and (ii) displaying a first additional screen indicator on said first screen, said first additional screen indicator indicating that a second subset of said all of the character combination choices of said first set may be selectively displayed on a second screen provided on said display;
receiving a signal resulting from an additional key depression, said first key depression sequence and said signal resulting from said additional key depression together forming a second key depression sequence;
generating a second set of character combination choices using said text disambiguation function based on said second key depression sequence;
determining whether all of the character combination choices of said second set will fit on a third screen provided on said display;
displaying said all of the character combination choices of said second set on said third screen if it is determined that said all of the character combination choices of said second set will fit on said third screen; and
if it is determined that said all of the character combination choices of said second set will not fit on said third screen: (i) displaying a first subset of said all of the character combination choices of said second set on said third screen, and (ii) displaying a second additional screen indicator on said third screen, said second additional screen indicator indicating that a second subset of said all of the character combination choices of said second set may be selectively displayed on a fourth screen provided on said display.

2. The method according to claim 1, wherein said electronic device is a handheld electronic device.

3. The method according to claim 1, wherein no more than a maximum number of character combination choices may be displayed on said first screen and said third screen, wherein said step of determining whether all of the character combination choices of said first set will fit on said first screen includes determining whether a total number of said all of the character combination choices of said first set is greater than said maximum number of character combination choices, and wherein said step of determining whether all of the character combination choices of said second set will fit on said third screen includes determining whether a total number of said all of the character combination choices of said second set is greater than said maximum number of character combination choices.

4. The method according to claim 3, wherein said maximum number of character combination choices is a pre-set number established before said key depression sequence is input into said electronic device.

5. The method according to claim 3, wherein said maximum number of character combination choices is determined after said key depression sequence is input into said electronic device.

6. The method according to claim 1, wherein said first additional screen indicator and said second additional screen indicator each comprises an ellipses.

7. The method according to claim 1, wherein said first additional screen indicator and said second additional screen indicator are provided in a first color and said character combination choices of said first set and said character combination choices of said second set are provided in one or more second colors, said first color being different than said one or more second colors.

8. The method according to claim 1, wherein said first additional screen indicator and said second additional screen indicator are each caused to flash when displayed on said first screen and said third screen, respectively.

9. The method according to claim 1, wherein said first subset and said second subset of the character combination choices of said first set comprise said all of the character combination choices of said first set.

10. A handheld electronic device, comprising:
a keyboard having a plurality of keys;
a display;
a processor; and
a memory storing one or more routines executable by said processor, said one or more routines implementing a text disambiguation function and being adapted to:
generate a first set of character combination choices using said text disambiguation function based on a first key depression sequence resulting from a depression of one or more of said keys;
determine whether all the character combination choices of said first set will fit on a first screen provided on said display;
display said all of the character combination choices of said first set on said first screen if it is determined that said all of the character combination choices of said first set will fit on said first screen;
if it is determined that said all of said plurality of character combination choices will not fit on said first screen: (i) display a first subset of said all of the character combination choices of said first set on said first screen, and (ii) display a first additional screen indicator on said first screen, said first additional screen indicator indicating that a second subset of said all of the character combination choices of said first set may be selectively displayed on a second screen provided on said display;
receive a signal resulting from a depression of an additional one of said keys, said first key depression sequence and said signal together forming a second key depression sequence;
generate a second set of character combination choices using said text disambiguation function based on said second key depression sequence;
determine whether all of the character combination choices of said second set will fit on a third screen provided on said display;
display said all of the character combination choices of said second set on said third screen if it is determined that said all of the character combination choices of said second set will fit on said third screen; and
if it is determined that said all of the character combination choices of said second set will not fit on said third screen: (i) display a first subset of said all of the character combination choices of said second set on said third screen, and (ii) display a second additional screen indicator on said third screen, said second additional screen indicator indicating that a second subset of said all of the character combination choices of said second set may be selectively displayed on a fourth screen provided on said display.

11. The handheld electronic device according to claim 10, wherein no more than a maximum number of character combination choices may be displayed on said first screen and said third screen, and wherein said one or more of said routines are further adapted to determine whether a total number of said all of the character combination choices of said first set is greater than said maximum number of character combination choices and whether a total number of said all of the character combination choices of said first set is greater than said maximum number of character combination choices.

12. The handheld electronic device according to claim 11, wherein said maximum number of character combination choices is a pre-set number established before said depression of a plurality of said keys.

13. The handheld electronic device according to claim 11, wherein said maximum number of character combination choices is determined after said depression of a plurality of said keys.

14. The handheld electronic device according to claim 10, wherein said first additional screen indicator and said second additional screen indicator each comprises an ellipses.

15. The handheld electronic device according to claim 10, wherein said first additional screen indicator and said second additional screen indicator are provided in a first color and said character combination choices of said first set and said character combination choices of said second set are provided in one or more second colors, said first color being different than said one or more second colors.

16. The handheld electronic device according to claim 10, wherein said one or more of said routines are further adapted to cause said first additional screen indicator and said second additional screen indicator to flash when displayed on said first screen and said third screen, respectively.

17. The handheld electronic device according to claim 10, wherein said first subset and said second subset of the character combination choices of said first set comprise said all of the character combination choices of said first set.

## Amended claims

### Amended claims in accordance with Rule 86(2) EPC.

**1.** A method of displaying character combination choices on a display (60) of an electronic device, said electronic device having a text disambiguation function, the method comprising:
generating a first set of character combination choices using said text disambiguation function based on a first key depression sequence input into said electronic device;
determining a first maximum number of character combination choices after said first key depression sequence is input into said electronic device;
determining whether all of the character combination choices of said first set will fit on a first screen provided on said display based on said first maximum number of character combination choices;
displaying said all of the character combination choices of said first set on said first screen if it is determined that said all of the character combination choices of said first set will fit on said first screen;
if it is determined that said all of the character combination choices of said first set will not fit on said first screen: (i) displaying a first subset of said all of the character combination choices of said first set on said first screen, and (ii) displaying a first additional screen indicator (88) on said first screen, said first additional screen indicator (88) indicating that a second subset of said all of the character combination choices of said first set may be selectively displayed on a second screen provided on said display;
receiving a signal resulting from an additional key depression, said first key depression sequence and said signal resulting from said additional key depression together forming a second key depression sequence;
generating a second set of character combination choices using said text disambiguation function based on said second key depression sequence;
determining a second maximum number of character combination choices after said second key depression sequence is input into said electronic device;
determining whether all of the character combination choices of said second set will fit on a third screen provided on said display based on said second maximum number of character combination choices;
displaying said all of the character combination choices of said second set on said third screen if it is determined that said all of the character combination choices of said second set will fit on said third screen; and
if it is determined that said all of the character combination choices of said second set will not fit on said third screen: (i) displaying a first subset of said all of the character combination choices of said second set on said third screen, and (ii) displaying a second additional screen indicator (88) on said third screen, said second additional screen indicator (88) indicating that a second subset of said all of the character combination choices of said second set may be selectively displayed on a fourth screen provided on said display (60).

**2.** The method according to claim 1, wherein said electronic device is a handheld electronic device (4).

**3.** The method according to claim 1, wherein said step of determining whether all of the character combination choices of said first set will fit on said first screen includes determining whether a total number of said all of the character combination choices of said first set is greater than said first maximum number of character combination choices, and wherein said step of determining whether all of the character combination choices of said second set will fit on said third screen includes determining whether a total number of said all of the character combination choices of said second set is greater than said second maximum number of character combination choices.

**4.** The method according to claim 1, wherein said first additional screen indicator (88) and said second additional screen indicator (88) each comprises an ellipses.

**5.** The method according to claim 1, wherein said first additional screen indicator (88) and said second additional screen indicator (88) are provided in a first color and said character combination choices of said first set and said character combination choices of said second set are provided in one or more second colors, said first color being different than said one or more second colors.

**6.** The method according to claim 1, wherein said first additional screen indicator (88) and said second additional screen indicator (88) are each caused to flash when displayed on said first screen and said third screen, respectively.

**7.** The method according to claim 1, wherein said first subset and said second subset of the character combination choices of said first set comprise said all of the character combination choices of said first set.

**8.** A handheld electronic device (4), comprising:
a keyboard (24) having a plurality of keys (28);
a display (60);
a processor (16); and
a memory (20) storing one or more routines (22) executable by said processor (16), said one or more routines implementing a text disambiguation function and being adapted to:
generate a first set of character combination choices using said text disambiguation function based on a first key depression sequence resulting from a depression of one or more of said keys;
determine a first maximum number of character combination choices after said first key depression sequence is input into said electronic device;
determine whether all the character combination choices of said first set will fit on a first screen provided on said display based on said first maximum number of character combination choices;
display said all of the character combination choices of said first set on said first screen if it is determined that said all of the character combination choices of said first set will fit on said first screen;
if it is determined that said all of said plurality of character combination choices will not fit on said first screen: (i) display a first subset of said all of the character combination choices of said first set on said first screen, and (ii) display a first additional screen indicator (88) on said first screen, said first additional screen indicator indicating that a second subset of said all of the character combination choices of said first set may be selectively displayed on a second screen provided on said display;
receive a signal resulting from a depression of an additional one of said keys, said first key depression sequence and said signal together forming a second key depression sequence;
generate a second set of character combination choices using said text disambiguation function based on said second key depression sequence;
determine a second maximum number of character combination choices after said second key depression sequence is input into said electronic device;
determine whether all of the character combination choices of said second set will fit on a third screen provided on said display based on said second maximum number of character combination choices;
display said all of the character combination choices of said second set on said third screen if it is determined that said all of the character combination choices of said second set will fit on said third screen; and
if it is determined that said all of the character combination choices of said second set will not fit on said third screen: (i) display a first subset of said all of the character combination choices of said second set on said third screen, and (ii) display a second additional screen indicator on said third screen, said second additional screen indicator (88) indicating that a second subset of said all of the character combination choices of said second set may be selectively displayed on a fourth screen provided on said display (60).

**9.** The handheld electronic device (4) according to claim 8, wherein said one or more of said routines are further adapted to determine whether a total number of said all of the character combination choices of said first set is greater than said first maximum number of character combination choices and whether a total number of said all of the character combination choices of said second set is greater than said second maximum number of character combination choices.

**10.** The handheld electronic device (4) according to claim 8, wherein said first additional screen indicator (88) and said second additional screen indicator (88) each comprises an ellipses.

**11.** The handheld electronic device (4) according to claim 8, wherein said first additional screen indicator (88) and said second additional screen indicator (88) are provided in a first color and said character combination choices of said first set and said character combination choices of said second set are provided in one or more second colors, said first color being different than said one or more second colors.

**12.** The handheld electronic device (4) according to claim 8, wherein said one or more of said routines (22) are further adapted to cause said first additional screen indicator (88) and said second additional screen indicator (88) to flash when displayed on said first screen and said third screen, respectively.

**13.** The handheld electronic device (4) according to claim 8, wherein said first subset and said second subset of the character combination choices of said first set comprise said all of the character combination choices of said first set.
